# EUROPÄISCHE PATENTANMELDUNG

(11) **EP 1 810 880 A1**
(43) Veröffentlichungstag der Anmeldung: **25.07.2007**
(21) Anmeldenummer: 06026245.8
(22) Anmeldetag: 19.12.2006
(51) Int. Cl.: B60Q 1/04, B60Q 1/06

(54) **Scheinwerfer für ein Kraftfahrzeug**

(30) Priorität: 19.01.2006 DE 102006002675
(71) Anmelder: GM Global Technology Operations, Inc., Detroit, MI 48265-3000 (US)
(72) Erfinder: Lossnitzer, Edgar, 64297 Darmstadt (DE)
(74) Vertreter: Daniel, Ulrich W.P.

(57) **Zusammenfassung**

Ein Scheinwerfer (1) für ein Kraftfahrzeug verfügt über ein Gehäuse, einen Reflektor und ein Leuchtmittel. Zur Erleichterung der Montage des Scheinwerfers (1) besteht das Gehäuse aus zwei hintereinander angeordneten flexibel miteinander verbundenen Gehäuseteilen (2a, 2b).

## Beschreibung

Die Erfindung bezieht sich auf einen Scheinwerfer für ein Kraftfahrzeug mit einem Gehäuse, einem Reflektor und einem Leuchtmittel.

Scheinwerfer zum Einbau in Fahrzeugkarosserien sind einem Fachmann für Kraftfahrzeugtechnik in verschiedenen Ausführungsformen bekannt. Sie umfassen im Allgemeinen ein Gehäuse, beispielsweise als ein Kunststoff-Spritzgussteil, zum Schutz des innenliegenden Reflektors, der zur Bündelung und Ausstrahlung des von einem Leuchtmittel erzeugten Lichts dient. Weiterhin verfügen Scheinwerfer über eine Scheinwerferscheibe, die eine Öffnung des Reflektors überdeckt und gegebenenfalls als Streu-oder Sammellinse ausgebildet sein kann. Prinzipiell ist es möglich, in einem Gehäuse bzw. einem Reflektor mehrere Leuchtmittel anzuordnen, um bei einem Frontscheinwerfer ein Abblendlicht und ein Fernlicht in einem Gehäuse zu integrieren. Die Reflektoren sind im Wesentlichen paraboloidförmig ausgebildet.

Bei der Montage von Scheinwerfern an einer Fahrzeugkarosserie werden diese üblicherweise in eine entsprechend ausgebildete Karosserieöffnung eingesetzt und unter anderem mit Hilfe von Rastverbindungen oder Verschraubungen lösbar befestigt.

Hierbei stellt sich das Problem, dass der Scheinwerfer bzw. das Schweinwerfergehäuse an einer Karosseriestruktur, wie beispielsweise einem Querträger im Frontbereich der Fahrzeugkarosserie, befestigt werden und ein Teil des Scheinwerfergehäuses passgenau in eine entsprechende Öffnung bzw. Aussparung an einem Stoßfänger, einer Motorhaube oder dergleichen eingepasst werden muss, wobei es aufgrund selbst geringfügiger Fertigungstoleranzen im Zusammenspiel der Teile zu Problemen bei der richtigen Positionierung des Scheinwerfergehäuses kommen kann, wodurch aufwändige Nacharbeiten bzw. Korrekturen der Scheinwerferposition, oftmals in Verbindung mit den angrenzenden Teilen wie Kotflügel, Motorhaube oder Grill notwendig sind.

Die DE 38 38 159 C2 beschreibt einen Einstellmechanismus für einen in einem Scheinwerfergehäuse verschwenkbar gelagerten Reflektor, der über ein Kugelgelenk in dem Gehäuse des Scheinwerfers beweglich gelagert ist, um insbesondere bei der Montage des Scheinwerfers an der Kraftfahrzeugkarosserie eine Anpassung an verschiedene Ausrichtungen des Scheinwerfergehäuses zu ermöglichen, so dass das eigentliche Scheinwerferlicht in gewünschter Richtung ausgestrahlt wird.

Im Weiteren offenbart die EP 0 615 880 B1 einen Einstellknopf zur Ausrichtung eines Spiegels oder Reflektors eines Kraftfahrzeugscheinwerfers. Mit diesem Einstellknopf ist es möglich, den Spiegel oder Reflektor derart auszurichten, dass das von einem Leuchtmittel erzeugte Licht in gewünschter Richtung aus dem Scheinwerfer austritt.

Die bekannten Scheinwerfer sind insofern nachteilig, als eine Anpassung an unterschiedliche Gegebenheiten, wie sie durch Fertigungstoleranzen verursacht sind, bei der Montage nicht möglich ist.

Es ist Aufgabe der Erfindung, einen Scheinwerfer für ein Kraftfahrzeug der eingangs genannten Art anzugeben, der in einfacher Weise an geringfügig voneinander in ihren Abmessungen abweichende Bauteile bei der Montage des Kraftfahrzeugs angepasst werden kann.

Erfindungsgemäß wird die Aufgabe dadurch gelöst, dass das Gehäuse aus zwei hintereinander angeordneten, flexibel miteinander verbundenen Gehäuseteilen besteht.

Der Kerngedanke der Erfindung besteht darin, ein an sich bekanntes Scheinwerfergehäuse nicht einteilig, sondern zweiteilig auszubilden, wobei die beiden das Gehäuse bildenden Gehäuseteile hintereinander ausgerichtet sind.

Durch die flexible Verbindung der beiden Gehäuseteile miteinander ist eine Relativbewegung der beiden Gehäuseteile zueinander möglich, so dass jedes Gehäuseteil für sich genommen mit einem unterschiedlichen Bauteil bzw. einem unterschiedlichen Bereich der Karosserie des Kraftfahrzeugs bei der Montage verbunden werden kann. Aufgrund der gegebenen Relativbewegung der beiden Gehäuseteile zueinander kann eine Anpassung an variierende Anbindungsbereiche, wie z. B. Kotflügel, Stoßfänger, Grill und Motorhaube, erfolgen, d.h. der Scheinwerfer bzw. dessen beide Gehäuseteile können jeweils stets passgenau in die hierfür vorgesehenen Einbauöffnungen oder Einbauaussparungen eingesetzt und dort befestigt werden.

Insbesondere kann ein derartiger Scheinwerfer in Kraftfahrzeugen verbaut werden, deren identisch konstruierte Einzelteile aus unterschiedlichen Fertigungswerkzeugen stammen und auf nicht zum so genannten Führungsfahrzeug identischen Fertigungsanlagen hergestellt wurden. Dies erfolgt insbesondere dann, wenn konstruktiv identische Fahrzeuge an unterschiedlichen Orten, z.B. in Deutschland, USA und China, hergestellt werden. Trotz der eingehaltenen identischen Einzelteil- und Zusammenbautoleranzen kommt es hier zu erlaubten Variationen, die sehr aufwändiges Abstimmen, auch Matchen genannt, des Vorderwagens und des Scheinwerfers erfordern. In einem solchen Fall ist es möglich, den Scheinwerfer in Richtung des Lichtaustritts aus dem Scheinwerfer gesehen mit dem hinteren Gehäuseteil an der inneren, stabilen Karosseriestruktur zu befestigen und das vordere Gehäuseteil durch die flexible Verbindung an die unterschiedlichen Gegebenheiten von Kotflügel, Motorhaube und Stoßfänger anzupassen. Somit müssen für unterschiedliche Fertigungsstätten keine unterschiedlichen Scheinwerfer eingesetzt werden.

Im Folgenden wird die Erfindung im Wesentlichen in Bezug auf einen Scheinwerfer an einer Vorderseite bzw. einer Front eines Kraftfahrzeugs beschrieben. Es ist für den Fachmann ersichtlich, dass ein derartiger Scheinwerfer auch seitlich bzw. am Heck eines Kraftfahrzeugs angeordnet sein kann.

Der Vorteil der Erfindung besteht darin, dass durch die Ausbildung des Gehäuses in Form zweier flexibel miteinander verbundener Gehäuseteile der Scheinwerfer bei der Montage in einfacher Weise an geringfügig voneinander abweichende Karosseriebauteile angepasst werden kann, wodurch bei der Montage des Kraftfahrzeugs keine Nacharbeiten oder aufwändige Anpassungen mehr notwendig sind.

Zur Anordnung gegebenenfalls einer Steuerelektronik sowie des Leuchtmittels des Scheinwerfers sind zweckmäßigerweise diese gemeinsam in dem hinteren Gehäuseteil angeordnet. Dabei ist der Scheinwerfer bevorzugt derart ausgebildet, dass der Hauptteil des Reflektors zur Bündelung des vom Leuchtmittel erzeugten Lichts ebenfalls in diesem Gehäuseteil angeordnet ist, um unabhängig von einer Relativbewegung des vorderen Gehäuseteils immer die gleiche Lichtverteilung zu erhalten.

Bei der Montage des Scheinwerfers wird das hintere Gehäuseteil an einer Innenstruktur der Fahrzeugkarosserie befestigt, um an dieser Stelle stets die gleiche Ausrichtung des Scheinwerfers zu erhalten. Zur gegebenenfalls lösbaren Montage dieses hinteren Gehäuseteils können an sich bekannte Verbindungsmittel, wie unter anderem eine Verschraubung oder eine lösbare Rastverbindung, eingesetzt werden.

Zur Vereinfachung des Montagevorgangs des Kraftfahrzeugs kann das vordere Gehäuseteil, das flexibel mit dem hinteren, fest an der inneren Karosseriestruktur befestigten Gehäuseteil verbunden ist, an eine Öffnung oder Aussparung in einer Außenhaut des Kraftfahrzeugs, in die der Scheinwerfer eingesetzt wird, angepasst werden. Hierzu können die beiden Gehäuseteile relativ zueinander bewegt werden, bis das vordere Gehäuseteil beispielsweise in eine Aussparung in einem Stoßfänger, einer Motorhaube oder dergleichen bzw. in eine von diesen Teilen gebildeten Öffnung passgenau eingesetzt werden kann.

Nach einer weiteren Ausgestaltung ist der Scheinwerfer mittels eines Teils des Kraftfahrzeugs, insbesondere eines Stoßfängers, in seiner Position festlegbar. Hierzu ist die Innenstruktur der Fahrzeugkarosserie sowie der Stoßfänger derart ausgebildet, dass der Scheinwerfer durch den Stoßfänger in seiner Position an der Innenstruktur der Fahrzeugkarosserie gedrückt und gehalten wird.

Um den Scheinwerfer an beispielsweise unterschiedlich geneigte Außenflächen des Kraftfahrzeugs anzupassen bzw. um Fertigungstoleranzen besser ausgleichen zu können, ist nach einer Weiterbildung eine Scheinwerferscheibe relativ zum vorderen Gehäuseteil beweglich an diesem gelagert. Somit kann die Scheinwerferscheibe relativ zum vorderen Gehäuseteil und damit auch relativ zum Scheinwerfer und zur Fahrzeugkarosserie bewegt werden, um die Scheinwerferscheibe passgenau in eine Öffnung der Fahrzeugkarosserie einzupassen. Hierzu kann insbesondere eine elastische Befestigung in Form einer Gummidichtung verwendet werden, wobei die als Gummiring ausgebildete Gummidichtung die Scheinwerferscheibe umgreift und ihrerseits am vorderen Gehäuseteil befestigt ist.

Bevorzugt ist das vordere Gehäuseteil relativ zum hinteren Gehäuseteil in sechs verschiedenen Freiheitsgraden bewegbar, nämlich in drei translatorischen Freiheitsgraden entlang der drei Raumachsen sowie in drei rotatorischen Freiheitsgraden jeweils um die Raumachsen. Sonach kann das vordere Gehäuseteil in beliebiger Weise verdreht oder verschwenkt werden, um sich an unterschiedliche Gegebenheiten beim Einbau anpassen zu können. Vorteilhafterweise ist die flexible Verbindung derart ausgelegt, dass das vordere Gehäuseteil in jeder Raumrichtung translatorisch um bis zu 5 mm bewegt werden kann und jeweils um 10° bis 20° um jede Raumachse verdrehbar ist. Bei besonderen Anforderungen können sich diese Werte wesentlich erhöhen.

In Ausgestaltung der flexiblen Verbindung sind die beiden Gehäuseteile des Scheinwerfers über eine ziehharmonikaartige Struktur, beispielsweise in Form eines flexiblen Balgs, miteinander verbunden, die eine Bewegung bzw. Verdrehung in allen Raumrichtungen ermöglicht. Die entsprechende Ausgestaltung einer derartigen Struktur ist dem Fachmann in Abhängigkeit der für die Gehäuseteile gewählten Materialien möglich.

Bei einer vorteilhaften Ausführungsform ist das Gehäuse des Scheinwerfers einstückig in Form eines Kunststoff-Spritzgussteils ausgebildet, bei dem zwischen den beiden Gehäuseteilen eine ziehharmonikaartige Struktur mit entsprechenden Materialverdünnungen zur Erreichung der Beweglichkeit der beiden Gehäuseteile zueinander ausgebildet ist.

In einer alternativen Ausgestaltung, beispielsweise falls die beiden Gehäuseteile des Scheinwerfers aus Metall bestehen, ist zwischen beiden Gehäuseteilen eine elastische Manschette vorgesehen, die insbesondere aus einem dauerelastischen Gummi besteht, um ebenfalls die Relativbewegung der beiden Gehäuseteile zu ermöglichen. Die Manschette kann jeweils in umlaufende Nuten an den Gehäuseteilen eingesetzt sein.

Selbstverständlich kann eine an sich bekannte aktive und/oder passive Leuchtweitenregulierung für den Scheinwerfer vorgesehen sein kann, um beispielsweise unterschiedliche Karosserieneigungen bei unterschiedlichen Beladungen des Kraftfahrzeugs auszugleichen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur die Ansprüche definiert.

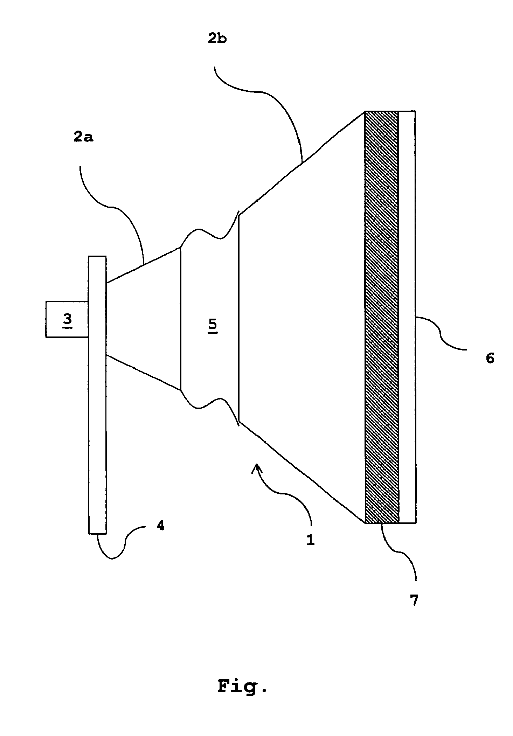

Die Erfindung wird im Folgenden anhand eines Ausführungsbeispiels unter Bezugnahme auf die zugehörige Zeichnung näher erläutert. Die einzige Fig. der Zeichnung zeigt eine Seitenansicht eines erfindungsgemäßen Scheinwerfers.

Ein Gehäuse eines zum Einbau in ein Kraftfahrzeug vorgesehenen Scheinwerfers 1 ist nicht als vollständig starres Gehäuse ausgeführt, sondern besteht aus zwei Gehäuseteilen 2a, 2b, die über einen ziehharmonikaartigen Balg 5 flexibel miteinander verbunden sind. Das in Richtung des Lichtaustritts aus dem Scheinwerfer 1 gesehen hintere Gehäuseteil 2a nimmt unter anderem ein Leuchtmittel, einen Reflektor, eine Steuerelektronik sowie weitere von Fahrzeugscheinwerfern bekannten Komponenten auf und an dem vorderen Gehäuseteil 2b ist ein Scheinwerferglas 6 angeordnet. Der Blag 5 ermöglicht eine Relativbewegung des vorderen Gehäuseteils 2b relativ zu dem hinteren Gehäuseteil 2a vorzugsweise in drei translatorischen Richtungen um jeweils 5 mm sowie um die drei Raumachsen in rotatorischer Weise um 10° bis 20°.

Dabei kann das gesamte Gehäuse, d.h. die beiden Gehäuseteile 2a, 2b sowie der ziehharmonikaartige Balg 5 einstückig in Form eines Kunststoff-Spritzgussteils ausgebildet sein oder alternativ sind zwei Gehäuseteile 2a, 2b mit einer ziehharmonikaartigen Gummimanschette miteinander verbunden, wobei die Gummimanschette jeweils in Nuten an den Gehäuseteilen 2a, 2b eingesetzt ist.

Das hintere Gehäuseteil 2a des Scheinwerfers 1 ist in einer festen Ausrichtung an der Fahrzeugkarosserie befestigt und hier beispielsweise eingeklipst, eingerastet oder verschraubt. Dazu dient eine an sich beliebig ausgestaltete Befestigungseinrichtung 3, die nur schematisch angedeutet ist.

Das vordere Gehäuseteil 2b ist über den ziehharmonikaartigen Balg 5 relativ zum hinteren Gehäuseteil 2a beweglich, wodurch das vordere Gehäuseteil 2b in eine Öffnung oder Ausnehmung in einer Außenwand des Kraftfahrzeugs bei der Montage eingesetzt und eingepasst werden kann. Hierdurch ist es insbesondere möglich, geringe Toleranzfehler auszugleichen, ohne dass der gesamte Scheinwerfer 1 oder seine Anbindungsbereiche neu justiert werden müssen.

Das Scheinwerferglas 6, das gegebenenfalls auch zum Bündeln bzw. Zerstreuen des von dem Leuchtmittel abgegebenen Lichts konturiert ist, ist beispielsweise mit dem Gehäuseteil 2b verklebt oder verschweißt oder schwimmend am vorderen Gehäuseteil 2b gelagert. Hierzu ist das Scheinwerferglas 6 am vorderen Gehäuseteil 2b mit einer Gummidichtung 7 festgelegt.

### Bezugszeichenliste

- 1: Scheinwerfer
- 2a: hinteres Gehäuseteil
- 2b: vorderes Gehäuseteil
- 3: Befestigungseinrichtung
- 4: Fahrzeugkarosserie
- 5: zieharmonikaartiger Balg
- 6: Scheinwerferglas
- 7: Gummidichtung

## Patentansprüche

1. Scheinwerfer für ein Kraftfahrzeug mit einem Gehäuse, einem Reflektor und einem Leuchtmittel, **dadurch gekennzeichnet, dass** das Gehäuse aus zwei hintereinander angeordneten, flexibel miteinander verbundenen Gehäuseteilen (2a, 2b) besteht.

2. Scheinwerfer nach Anspruch 1, **dadurch gekennzeichnet, dass** das Leuchtmittel sowie gegebenenfalls eine Steuerelektronik in dem in Richtung des Lichtaustritts aus dem Scheinwerfer gesehen hinteren Gehäuseteil (2a) angeordnet sind.

3. Scheinwerfer nach Anspruch 1 oder 2, **dadurch gekennzeichnet, dass** das hintere Gehäuseteil (2a) in einer festen Ausrichtung an einer Karosserie des Kraftfahrzeugs befestigbar ist.

4. Scheinwerfer nach einem der Ansprüche 1 bis 3, **dadurch gekennzeichnet, dass** das vordere Gehäuseteil (2b) in eine Öffnung in einer Außenhaut des Kraftfahrzeugs einpassbar ist.

5. Scheinwerfer nach einem der Ansprüche 1 bis 4, **dadurch gekennzeichnet, dass** der Scheinwerfer (1) mittels eines Teils des Kraftfahrzeugs, insbesondere unter der Vorspannung eines Stoßfängers, in seiner Position fixiert ist.

6. Scheinwerfer nach einem der Ansprüche 1 bis 5, **dadurch gekennzeichnet, dass** eine Scheinwerferscheibe (6) relativ zum vorderen Gehäuseteil (2b) beweglich an diesem gelagert ist, insbesondere mit einer elastischen Gummidichtung (7).

7. Scheinwerfer nach einem der Ansprüche 1 bis 6, **dadurch gekennzeichnet, dass** das vordere Gehäuseteil (2b) relativ zum hinteren Gehäuseteil (2a) in sechs Freiheitsgraden beweglich ist, nämlich in drei translatorischen und drei rotatorischen.

8. Scheinwerfer nach einem der Ansprüche 1 bis 7, **dadurch gekennzeichnet, dass** die beiden Gehäuseteile (2a, 2b) über eine ziehharmonikaartige Struktur (5) miteinander verbunden sind, insbesondere mit einer elastischen Manschette aus Gummi.

9. Scheinwerfer nach einem der Ansprüche 1 bis 7, **dadurch gekennzeichnet, dass** die beiden Gehäuseteile (2a, 2b) sowie eine ziehharmonikaartige Struktur (5) einstückig miteinander ausgebildet sind.

10. Scheinwerfer nach einem der Ansprüche 1 bis 9, **dadurch gekennzeichnet, dass** der Scheinwerfer (1) über eine Leuchtweitenregulierung verfügt.

11. Kraftfahrzeug mit einem Scheinwerfer nach einem der Ansprüche 1 bis 10.
